Europäisches Patentamt

**European Patent Office**

**Office européen des brevets**

(19)

(11) Numéro de publication : **0 140 041**

**B1**

(12) # FASCICULE DE BREVET EUROPÉEN

(45) Date de publication du fascicule du brevet :
02.03.88

(51) Int. Cl.⁴ : **H 02 P 9/10, H 02 J 3/28**

(21) Numéro de dépôt : **84110503.4**

(22) Date de dépôt : **04.09.84**

(54) Machine synchrone à régulateur supraconducteur de tension et vitesse.

(30) Priorité : **06.09.83 FR 8314213**

(43) Date de publication de la demande :
**08.05.85 Bulletin 85/19**

(45) Mention de la délivrance du brevet :
**02.03.88 Bulletin 88/09**

(84) Etats contractants désignés :
**AT BE CH DE FR GB IT LI LU NL SE**

(56) Documents cités :
**GB-A- 2 053 527**
**GB-A- 2 114 819**
**US-A- 4 122 512**
**US-A- 4 348 630**
**PATENTS ABSTRACTS OF JAPAN, vol. 5, no. 145, 12 septembre 1981, page 60E74; & JP - A - 56 78398 (YAMAHA HATSUDOKI K.K.) 27-06-1981**
**PATENTS ABSTRACTS OF JAPAN, vol. 7, no. 82, 6 avril 1983, page 146P189; & JP - A - 58 12032 (TOKYO SHIBAURA DENKI K.K.) 24-01-1983**

(73) Titulaire : **ALSTHOM**
**38, avenue Kléber**
**F-75784 Paris Cédex 16 (FR)**

**ELECTRICITE DE FRANCE Service National**
**2, rue Louis Murat**
**F-75008 Paris (FR)**

(72) Inventeur : **Sabrie, Jean-Louis**
**5, Domaine du Salbert Cravanche**
**F-90300 Valdoie (FR)**

(74) Mandataire : **Weinmiller, Jürgen et al**
**Lennéstrasse 9 Postfach 24**
**D-8133 Feldafing (DE)**

## Description

La présente invention est relative à une machine synchrone à régulateur de tension et de vitesse.

Les alternateurs entraînés par des turbines et couplés au réseau, sont associés à des dispositifs auxiliaires permettant de réguler la vitesse et la tension qui sont sujettes à des variations pour des causes diverses (délestage, court-circuits, oscillations aléatoires, etc...).

Ces dispositifs auxiliaires présentent des inconvénients, en particulier des temps de réponse trop élevés. Il en résulte que dans certains cas, les écarts de vitesse ou de tension sont très difficilement limités par les régulateurs existants.

Ceci conduit à dimensionner les machines synchrones tant mécaniquement qu'électriquement pour des contraintes très supérieures aux contraintes nominales.

Un but de l'invention est de réaliser une machine synchrone ayant un régulateur de vitesse et de tension incorporé simple, et assurant des temps de réponse très courts.

Il en résulte des gains dans le dimensionnement de la machine, ainsi que dans celui de la turbine (dans le cas d'un alternateur) et dans celui du transformateur de couplage au réseau, par suite de la diminution des courants transitoires.

On connaît un dispositif de régulation des fluctuations de tension d'un réseau alternatif électrique à haute tension, comprenant une bobine supraconductrice connectée au réseau par l'intermédiaire d'un circuit convertisseur alternatif-continu piloté par un calculateur.

On se référa à ce sujet au document US-A-4 122 512 ou à l'article paru dans : IEE Transactions on Magnetics Vol MAG-17 N° 5, Septembre 1981 page 1950 :

« 30 MJ Superconducting magnet energy storage for BPA transmission line stabilizer » par R. I. SCHERMER, H. J. BOENIG et J. DEAN.

L'injection rapide dans le réseau d'un courant de phase convenable permet d'amortir les oscillations et de régulariser la tension du réseau.

On connaît en outre par le document FR-A-2 117 353 une machine électrique selon le préambule de la revendication 1, dont le système de stockage d'énergie est un volant d'inertie en liaison avec une machine électrique auxiliaire.

L'invention a pour but de proposer une machine de ce type qui se passe d'un volant d'inertie encombrant et dangereux et qui permet malgré tout de régulariser étroitement tension et vitesse.

Ce but est atteint selon l'invention par la machine telle qu'elle est caractérisée dans la revendication 1. En ce qui concerne une caractéristique d'une mise en œuvre préférée de l'invention, référence est faite à la revendication 2.

C'est donc le mérite de l'inventeur d'avoir songé à placer au coeur même d'une machine synchrone une bobine supra-conductrice capable de stocker et de restituer rapidement une énergie appropriée pour réguler vitesse et tension de la machine.

L'invention sera décrite ci-après plus en détail à l'aide de deux modes de réalisation de l'invention en référence au dessin ci-annexé dans lequel :

- la figure 1 est un schéma électrique d'une machine synchrone selon un premier mode de réalisation

- la figure 2 est un schéma électrique d'une machine synchrone selon une variante.

Les schémas des figures sont des représentations monophasées afin d'en simplifier la compréhension.

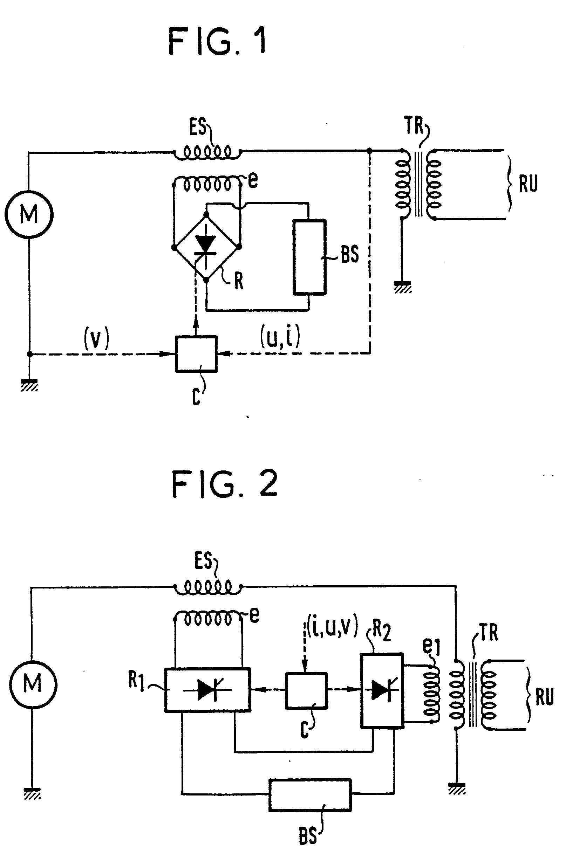

Dans la figure 1, le cercle M représente les parties stator et rotor de la machine, à l'exclusion de l'enroulement statorique ES représenté à l'extérieur du cercle pour la clarté du dessin.

Selon l'invention, l'enroulement statorique ES est associé et couplé magnétiquement et électriquement à un second enroulement statorique e connecté à une première diagonale d'un pont redresseur statique R.

Une bobine supraconductrice BS est branchée aux bornes de la seconde diagonale du pont redresseur.

Le pont redresseur est commandé par un calculateur C selon un programme dont les paramètres sont par exemple le courant i et la tension u statoriques, et la vitesse v de la machine. Les paramètres sont fournis au calculateur par des capteurs non représentés.

La machine fonctionne, soit en alternateur pour fournir du courant à un réseau d'utilisation RU par l'intermédiaire d'un transformateur de tranche TR, soit en moteur en recevant du courant du réseau.

Dans la machine de la figure 1, stator et rotor peuvent être du type classique à enroulements de cuivre fonctionnant à température supérieure à l'ambiante.

En variante, au moins un des enroulements de la machine est supraconducteur.

En cas d'instabilité de vitesse ou de tension, la bobine BS injecte une énergie dans le circuit statorique.

Selon le cas, le courant injecté sera en phase ou en opposition de phase avec la tension du stator (apport d'énergie active) ou en quadrature (apport d'énergie réactive).

On peut ainsi, de manière quasi instantanée, stabiliser la machine en tension (amortissement des petites oscillations et des oscillations hyposynchrones) et en vitesse (suppression des variations de vitesse lors du délestage ou en cas de court-circuit (fonctionnement en alternateur) ou en cas de forte variation du couple résistant (fonctionnement en moteur).

Il en résulte pour la machine des avantages nombreux qui se traduisent par une forte réduction du coût de la machine et de ses dimensions et une amélioration de ses performances :

a) les régulations de vitesse et de tension sont quasi instantanées ;

b) la régulation peut être optimisée aisément quelle que soit la technologie de la machine et les caractéristiques particulières du réseau où elle est implantée

c) on peut supprimer les enroulements amortisseurs

d) la régulation proposée permet de limiter les valeurs des courants, des couples et des vitesses en toutes circonstances, ce qui permet de réduire les dimensions de la machine pour une puissance donnée, par rapport aux machines connues (gain de poids, de coût)

e) les problèmes de fonctionnement du réseau électrique et du générateur sont quasiment indépendants, ce qui confère à la machine une très grande souplesse d'exploitation.

La figure 2 représente une variante de réalisation de la machine. Les éléments communs aux figures 1 et 2 ont reçu les mêmes numéros de référence.

Dans ce mode de réalisation, il y a deux ponts redresseurs R1, R2 (ensemble dodécaphasé) connectés d'une part à l'enroulement statorique e et d'autre part à un enroulement e1 du transformateur de tranche TR.

Dans le cas où l'alternateur est couplé en étoile et le transformateur en triangle, cette disposition permet de limiter les taux d'harmoniques introduits par le redresseur.

## Revendications

1. Machine électrique synchrone à régulateur de tension et de vitesse, comprenant un rotor muni d'un enroulement inducteur et un stator muni d'un premier enroulement statorique induit (ES) relié à un réseau (RU) d'alimentation (fonctionnement en moteur) ou d'utilisation (fonctionnement en générateur), associée à un système de stockage de l'énergie par l'intermédiaire d'un redresseur/onduleur (R, R$_1$) commandé en vue d'injecter des puissances actives ou réactives de manière à atténuer les régimes transitoires électriques et mécaniques de la machine synchrone, caractérisé en ce que le système de stockage de l'énergie est une bobine supraconductrice (BS) couplée à la machine par un second enroulement statorique induit (e) qui est relié au redresseur/onduleur (R, R$_1$) contrôlé par un calculateur programmé (C).

2. Machine synchrone selon la revendication 1, caractérisée en ce qu'un second circuit redresseur (R$_2$) placé en série avec le premier (R, R$_1$) et formant ainsi un ensemble dodécaphasé est alimenté par un enroulement (e$_1$) d'un transformateur de tranche (TR) couplant la machine au réseau (RU).

## Claims

1. A synchronous electric machine, having a voltage and speed regulator, comprising a rotor provided with a primary winding and a stator provided with a first secondary winding (ES) connected to a feeder grid (RU) (operating as a motor) or a user grid (operating as an alternator), coupled with an energy storage system by intermediary of a rectifier/inverter (R, R$_1$) controlled for injecting active or reactive power in such a manner as to attenuate the electrical and mechanical transient characteristics of the synchronous machine, characterized in that the energy storage system is constituted by a superconducting winding (BS) connected with the machine by intermediary of a second secondary winding (e), connected to the rectifier/inverter (R, R$_1$) controlled by a programmed computer (C).

2. A synchronous electric machine according to claim 1, characterized in that a second rectifier (R2) mounted in series with the first one (R, R$_1$) and forming together a twelve-phase system is fed from a winding (e$_1$) of a transformer coupling the machine to the grid (RU).

## Patentansprüche

1. Elektrische Synchronmaschine mit Spannungs- und Geschwindigkeitsregelung, bestehend aus einem Rotor mit Primärwicklung und einem Stator mit einer ersten Sekundärwicklung (ES), angeschlossen an ein Entnahmenetz (Motorbetrieb) oder ein Einspeisenetz (Generatorbetrieb), angekoppelt an ein Energiespeichersystem über einen Gleichrichter/Wechselrichter (R, R$_1$), der auf die Einspeisung von Wirk- oder Blindleistung hin gesteuert wird, um das elektrische und mechanische Transientverhalten der Synchronmaschine zu mildern, dadurch gekennzeichnet, daß das Energiespeichersystem eine supraleitende Wicklung ist (BS), die mit der Maschine über eine zweite Stator-Sekundärwicklung (e) gekoppelt ist, welche an den von einem programmierten Rechner (C) gesteuerten Gleichrichter/Wechselrichter (R, R$_1$) angeschlossen ist.

2. Elektrische Synchronmaschine nach Anspruch 1, dadurch gekennzeichnet, daß ein zweiter Gleichrichter (R$_2$), der mit dem ersten (R, R$_1$) in Reihe geschaltet ist und mit ihm ein Zwölfphasensystem bildet, über eine Wicklung (e$_1$) eines Transformators (TR) eingespeist wird, der die Maschine ans Netz schaltet.

# FIG. 1

# FIG. 2